# EUROPEAN PATENT SPECIFICATION

(11) **EP 2 992 534 B1**
(45) Date of publication and mention of the grant of the patent: **07.08.2019**
(21) Application number: 14791383.4
(22) Date of filing: 29.04.2014
(51) Int. Cl.: H01B 3/30, C08F 10/02, C08F 10/04, C08K 3/26, C08K 5/13, H01B 3/44

(54) **ELECTRICAL CABLE**
ELEKTROKABEL
CÂBLE ÉLECTRIQUE

(30) Priority: 01.05.2013 DK 201370241
(43) Date of publication of application: 09.03.2016
(73) Proprietor: NKT CABLES A/S, 4550 Asnæs (DK)
(72) Inventor: POULSEN, Keld Venø, DK-4550 Asnæs (DK); JØRGENSEN, Thomas Friis, DK-4300 Holbæk (DK)
(74) Representative: Kransell & Wennborg KB
(86) International application number: PCT/DK2014/050113
(87) International publication number: WO 2014/177153

(56) References cited:
- EP-B1- 1 888 686
- WO-A1-2011/019536
- WO-A1-2012/058044
- WO-A1-2013/042702
- WO-A2-2004/068217
- US-A1- 2005 192 385
- US-A1- 2007 100 032
- US-A1- 2011 011 615
- US-B2- 7 741 390

## Description

### TECHNICAL FIELD

The present invention relates to an electrical cable suitable for low voltage applications and comprising at least one insulated conducting wire.

### BACKGROUND ART

Electrical cables for low voltage applications usually comprise at least one insulated conducting wire usually in the form of a conducting copper or aluminium wire surrounded by an insulating material. Most often the electrical cable comprises two or more insulated conducting wires enclosed in a jacket.

In order to ensure high safety such that the wires can be easily identified, all common wiring safety codes mandate a colour scheme for the insulation requiring that the insulation on the respective wires is coloured in accordance with national or international colour codes. For examples one group of colours (e.g. red, yellow, brown and brass) are used in insulations on phases wires, another group of colours (e.g. blue, gray and silver) are used in insulations on neutral wires and a third group of colours (e.g. green and yellow/green) are used in insulations on ground wires.

For many years PVC materials have been selected as the preferred material for both the insulation and the jacket. However, due to the high amount of undesired and polluting additives and softeners which are required in PVC materials an attempt to find other materials has been ongoing for a long time.

One suggested solution is to provide the insulating material from a thermoplastic material. An example of this is described in WO2012060662 wherein is described an insulating composition constituting an insulating layer surrounding at least one conductor. The insulating composition is formed of non-cross-linked polypropylenes comprising 60-90 weight% of reactive polypropylenes and 40-10 weight% of polypropylenes.

US 20100122433 describes a cable insulation layer having excellent mechanical and electrical properties prepared from a composite free of plasticizer and comprising a heterogeneous, polymeric composition comprising (A) a polypropylene matrix, and (B) a propylene copolymer dispersed within the matrix and (i) comprising more than 80 weight percent (wt %) of units derived from propylene, and (ii) having a weight average particle size of less of than 1 micron (µm). The insulation layer is both environmentally friendly and further it maintains its physical and operational integrity at temperatures of at least 90° C.

US 7,619,165 describes a cable with a thermoplastic insulation layer for cables comprising a heterophasic polymer composition having superior mechanical and electrical properties and being environmentally friendly. The heterophasic polymer composition comprises a polymer matrix and dispersed therein a propylene copolymer having a weight average particle size of less than 1 µm.

Thermoplastic insulation layers e.g. as described above have been found to satisfy many of the properties required by a cable insulation. Usually the insulated conducting wires are encapsulated in a jacket extruded onto the wire or wires. In ordinary low voltage cables two or three wires are held together and optionally twisted and covered with a common jacket. When a cable end is mounted to an appliance the insulated conducting wires are exposed by removing the jacket at the cable section adjacent to the cable end, followed by removing the necessary parts of the insulation where after the mounting to the appliance is performed. For safety it is normally desired to recover the exposed insulated conducting wires with a sleeve. However, it has been found that this sleeve often is omitted or applied so that the exposed insulated conducting wires are only partly covered whereby the insulation on the wires will be exposed to UV irradiation. Where the appliance is a light emitting appliance such irradiation can be quite excessive and damaging to the insulation material.

In order to ensure a sufficient UV resistance of the insulation material to ensure a long lifetime of the cable (usually required to be 30 years) it will therefore be required to add substantial amounts of UV stabilizers. In the art it is known to use UV stabilizers in particular in cable jackets such as UV absorbers (typically carbon black) and hindered amine light stabilizers.

Except from carbon black which cannot be used in the wire insulation due to the requirement to colour code, such UV stabilizers are generally very expensive and add a substantial cost to the cable.

The object of the invention is to provide a cable with a thermoplastic insulation which has a high UV resistance and simultaneously can be produced at an attractive, low cost.

A further object is to provide a cable with one or more wires insulated with a thermoplastic insulation which is environmentally friendly, has a long durability even when exposed to UV irradiation and which can be produced at a relatively low cost.

These and other objects have been solved by the invention as defined in the claims and as described herein below.

It has been found that the invention and embodiments thereof have a number of additional advantages which will be clear to the skilled person from the following description.

According to the invention it has surprisingly been found that by combining UV stabilizers with the composition comprising component A, component B and component C together with a calcium carbonate source a desired high UV resistance can be obtained with a relative low amount of the UV stabilizers. According to the invention it has been found that a synergistic effect between the UV stabilizers and the calcium carbonate source with a surprisingly high UV stabilizing effect is obtained.

Even where the electrical cable is subjected to relative high temperatures such as up to about 90 °C, and simultaneously subjected to high UV exposure, the insulation comprising the combination of component A, component B and component C UV stabilizers together with the calcium carbonate source provides a fully acceptable UV stabilization.

In particular it has been found that the addition of calcium carbonate source increases the long-time effect of the UV stabilizers. It is believed that the calcium carbonate source protects the UV stabilizers against deactivation by acidic components from the environment and thereby maintains the UV stabilizers active for a long time.

The electrical cable of the invention can thereby be produced to exhibit increased and/or a long lasting UV resistance compared to corresponding prior art electrical cables or alternatively the amount of UV stabilizers can be reduced thereby resulting in a less costly cable.

Further it is highly beneficial that the insulation is provided by thermoplastic material which as a result thereof is recyclable.

The fact that the thermoplastic material is not cross-linked also makes it easier to extract additives including major part of the UV stabilizers from the material e.g. using supercritical extraction or dense gas extraction such as CO₂ extraction at increased pressure. Such methods are well known in the art e.g. as described in US 6,369,192.

The electrical cable of the invention comprises at least one conductive wire surrounded by an insulation, wherein the insulation is of a thermoplastic material comprising
- at least about 0.01 % by weight of component A,
- at least about 0.01 % by weight of component B,
- at least about 0.01 % by weight of component C and
- at least about 0.1 % by weight of a calcium carbonate source.

Unless other is specified "% by weight" is the % by weight of the total thermoplastic material.

Component A, component B and component C are all antioxidants and UV stabilizers, preventing degradation of polymer due to UV exposure as well as general degradation leading to formation of free radicals.

The first step in a polymer degradation process is usually the loss of a hydrogen atom from the polymer chain due to an energy input e.g. provided by irradiation. This polymer "free radical", [R*], can then react with an oxygen (O2) molecule to form a peroxy radical [ROO*] which will in turn abstract a hydrogen atom from another polymer chain to form a hydroperoxide [ROOH]. The hydroperoxide can split into two new free radicals, [RO*] + [*OH], which continue to propagate the reaction to other polymer molecules. For certain polymers, such as polypropylene, and polyethylene a polymer chain containing a free radical is likely to split into two smaller chains and thereby degrade. For polyethylene chains, the free radical may also cause one chain to graft onto another chain leading to cross linking. However, cross linking performed this way is generally uncontrolled and will often lead to an uncontrolled stiffening of the material.

The component A is selected from oligomeric hindered amines of the HALS type having a molecular weight of from about 500 to about 3400;
The HALS (Hindered Amine Light Stabilizers) are well known in the art and can include their salts, N-oxides and N-hydroxides. In general, the HALS can be described as having an amino nitrogen contained in a carbon-nitrogen-carbon chain which forms part of a non-aromatic heterocylic ring where each of the two carbon atoms of the chain is bonded to two lower alkyl groups which may be the same or different, each lower alkyl group containing from 1 to 12 carbon atoms, or to an alicyclic group containing from 4 to 9 carbon atoms, which groups sterically hinder the amine.

Preferably the HALS comprise a 2,2, 6,6-tetraalkylpiperidine moiety, their acid, addition salts or complexes with metal compounds.

Examples of preferred component A comprise poly[[6-[(1,1,3,3-tetramethylbutyl)amino]-1,3,5-triazine-2,4-diyl][(2,2,6,6-tetramethyl-4-piperidinyl)imino]-1,6-hexanediyl[(2,2,6,6-tetramethyl-4-piperidiyl)imino]]); 1,3,5-Triazine-2,4,6-triamine,N,N"'-1,2-ethanediylbis[N-[-3[4,6-bis[butyl(1,2,2,6,6-pentamethyl-4piperidyl)amino-1,3,5-triazin-2-yl]amino]propyl]-N'N"-dibutyl-N',N"-bis(1,2,2,6,6-pentametyl-4-periridinyl; Tetrakis [Methylene-3 (3',5'-di-tert-butyl-4-hydroxyphenyl)propionate]methane or 1,6-Hexanediamine,N,N'-bis(2,2,6,6-tetramethyl-4-piperidinyl)-polymer-polymer conjugate with 2,4,6-trichloro-1,3,5-triazine, reaction products with N-butyl-1-butanamine and/or N-butyl-2,2,6,6-tetramethyl-4-piperidinamine or combinations thereof.

Advantageously the component A has a molar weight of at least about 1000, thereby ensuring a low degree of evaporation from the thermoplastic material.

Component A is a relatively expensive UV stabilizer and in general it is advantageous to use a sufficient amount, but not more than required. Due to the invention the amount of component A can generally be held at a relatively low level. In an embodiment the thermoplastic material comprises up to about 0.7 % by weight of component A. In an embodiment the thermoplastic material comprises from about 0.2 to about 0.5 % by weight of component A.

The component B is selected from UV stabilizers comprising at least one sebacate moiety substituted with at least one R₁ and optionally R₂, where R₁ means 1,2,2,6,6-pentamethyl-4-piperidinyl or 2,2,6,6-tetramethyl-4-piperidinyl and R2 means methyl or 1,2,2,6,6-pentamethyl-4-piperidinyl.

The component B UV stabilizers are also of the hindered amine light stabilizer type and accordingly a component can be both a component A and a component B simultaneously. In such case it is advantageous that the total amount of component A and a component B is at least about 0.02 % by weight of the total thermoplastic material.

Examples of preferred component B comprise substituted bis(2,2,6,6-tetramethyl-4-piperidinyl)sebacate; bis(1,2,2,6,6-pentamethyl-4-piperidinyl)sebacate or Methyl(1.2.2.6.6-pentamethyl-4-piperidinyl)sebacate or combinations thereof.

In order to have a relative low degree of evaporation of the component B, the component B advantageously has a molar weight of at least about 300.

In an embodiment the thermoplastic material comprises up to about 0.7 % by weight of component B. This amount of component B will in most situation be fully sufficient, and preferably an even lover amount is applied such as from about 0.2 to about 0.5 % by weight of component B.

The component C is selected from hindered phenolics comprising at least one benzotriazole moiety and has a molecular weight of from about 200 to about 500.

The hindered phenol compounds are generally designed to react with the initial free radicals that are formed. These hindered phenols are often referred to as radical scavengers, since they react rapidly with peroxy radicals thereby breaking the degradation cycle.

The combination of the UV stabilizers of Component A, component B and component C has shown to be very effective and long lasting and this effect is further increased when combined with the calcium carbonate source.

Examples of preferred component C comprise 2-(5-chloro-2H-benzotriazole-2-yl)-6-(1,1-dimethylethyl)-4-methyl-phenol; 2-(2H-benzotriazole-2-yl)-4,6-ditertpentylphenol; 2-(2H-benzotriazole-2-yl)-p-cresol;2,4-di-tert-butyl-6-(5-chlorobenzotriazole-2-yl)phenol; [2-hydroxy-4-(octyloxy)phenyl]phenyl-methanone or combinations thereof.

Advantageously component C has a molar weight of at least about 200 in order to have a relative low degree of evaporation.

In an embodiment the thermoplastic material comprises up to about 0.7 % by weight of component C. This amount of component C will in most situation be fully sufficient, and preferably an even lower amount is applied such as from about 0.2 to about 0.5 % by weight of component C.

The calcium carbonate source can in principle be any kind of calcium carbonate source comprising calcium carbonate. In an embodiment the calcium carbonate source is in the form of essentially pure calcium carbonate. In an embodiment the calcium carbonate source is calcite, aragonite, vaterite, chalk, limestone, marble, travertine or combinations thereof.

It has been found that the calcium carbonate source is in the form of chalk is very effective and it is advantageous to select the calcium carbonate source to be chalk. In general it is also economically feasible to use chalk as the calcium carbonate source because of its relatively low cost.

The content of calcium carbonate in the calcium carbonate source should advantageously be relatively high and advantageously the calcium carbonate source comprises in per cent of the calcium carbonate source at least about 40 % by weight of calcium carbonate, preferably at least about 50 % by weight of calcium carbonate.

In an embodiment the calcium carbonate source comprises CaO, such as - in percent of the calcium carbonate source - at least about 10 % by weight of CaO, such as from about 30 to about 50 % by weight of CaO. The CaO can react with CO₂ from the air to calcium carbonate.

The calcium carbonate source should preferably be in the form of powder which by a compounding process can be incorporated into the thermoplastic material.

Advantageously the calcium carbonate source should have a specific surface area which is relative high to thereby provide a high protection of the UV stabilizers against deactivation by acidic components from the environment. On the other hand, it is also desired that the specific surface area is not so high that it will be consumed too fast, i.e. faster than desired in relation to the use of the electrical cable and the environment it will be used in.

In an embodiment the calcium carbonate source is in the form of particles with a specific surface area of at least about 0.5 m²/g determined by nitrogen adsorption BET method. Preferably the calcium carbonate source has a specific surface area of up to about 10 m²/g, such as from about 1 m²/g to about 9 m²/g, such as from about 1.5 to about 5 m²/g. Thereby a high protection of the UV stabilizers against deactivating by acidic components from the environment without the calcium carbonate source is consumed too fast

In an embodiment the calcium carbonate source is homogenously distributed in the thermoplastic material. This is the simplest way of incorporating the calcium carbonate source.

In an embodiment the concentration of calcium carbonate source in the thermoplastic material is higher at a longer distance from the conductive wire than at a shorter distance from the wire. This provides the option of having a very high concentration of the calcium carbonate source in an outermost layer of the insulation material which is mainly subjected to the attack from acidic components. The layer below the outermost layer of the insulation can have a lower concentration or even be without any calcium carbonate source. This solution is in particular advantageous where the electrical cable is for use in acidic environment.

In an embodiment the outer surface of the insulation is impregnated with chalk powder. This can be done for example by spraying chalk powder onto the electrical cable or by dipping the electrical cable in chalk powder after the insulation is extruded but before it is fully cooled.

For optimal protection it is in an embodiment desired that the thermoplastic material comprises at least about 0.3 % by weight of the calcium carbonate source. Preferably the thermoplastic material comprises from about 0.5 % by weight to about 3 % by weight of the calcium carbonate source. The amount of the calcium carbonate source should advantageously not exceed about 5 % by weight of the thermoplastic material, because a too high filling degree of calcium carbonate source may affect both electrical and mechanical properties, such as stiffness of the thermoplastic material. In a preferred embodiment the thermoplastic material comprises from about 1 % by weight to about 2 % by weight of the calcium carbonate source.

In a preferred embodiment the total amount of component A, component B and component C is up to about 1 % by weight of the thermoplastic material. It has been found that a total amount of these UV stabilizers is sufficient in most situations thanks to the invention. Preferably the total amount of component A, component B and component C is from about 0.4 % to about 0.8 % by weight of the thermoplastic material.

The thermoplastic material may comprise minor amounts of additives including other UV stabilizers and/or metal deactivators. The minor amount of such other additives is advantageously at most about 0.1 % by weight.

In an embodiment the thermoplastic material comprises up to about 0.1 % by weight of a metal deactivator preferably selected from 2',3-bis[[3-[3,5-di-tert-butyl-4-hydroxyphenyl]propionyl]]propionohydrazide; 1HBenzotriazole-1-methanamine,N,N-bis(2-ethylhexyl)-ar.methyl; p-(p-tolyl-sulfonylamido)-diphenylamine or combinations thereof.

In an embodiment the additional additive comprises one or more flame retardants, such mineral flame retardants e.g. in the form of Aluminium Tri-hydroxide (ATH) and/or Magnesium Dihydroxide (MDH) or Zinc borate which for example can be used in combination with ATH and/or MDH to enhance smoke suppression.

The polymer of the thermoplastic material is advantageously a polyolefin, more preferably polypropylene (PP), polyethylene (PE), a copolymer of PP and PE, or a mixture thereof. The polymer may be a linear polymer or a branched polymer.

In an embodiment the thermoplastic material comprises at least about 92 % by weight of polypropylene (PP), polyethylene (PE), a copolymer of PP and PE, or a mixture thereof. In an embodiment the thermoplastic material comprises at least about 93 % of weight. In an embodiment the thermoplastic material comprises at least about 94 % by weight. In an embodiment the thermoplastic material comprises at least about 95 % by weight. In an embodiment the thermoplastic material comprises at least about 96 % by weight. In an embodiment the thermoplastic material comprises at least about 97 % by weight of polypropylene (PP), polyethylene (PE), a copolymer of PP and PE, or a mixture thereof.

In an embodiment the thermoplastic material comprises at least about 95 % by weight of polypropylene (PP). It has been found that an electrical cable of the invention where the thermoplastic material comprises PP in fact will have a desirably high heat stability and further that the thermoplastic material will be sufficiently flexible for use in particular in low voltage cables.

In an embodiment the thermoplastic material comprises at least about 95 % by weight of a copolymer of PP and PE such as a block copolymer or a random copolymer. It has been found that an electrical cable of the invention where the thermoplastic material comprises a copolymer of PP and PE results in an even more flexible electrical cable while simultaneously the risk of the thermoplastic material forming cross linking due to free radical reactions, which ultimately can result in that the material will be difficult to recycle, is very low or even fully avoided.

In order to provide the electrical cable with the desired colour the thermoplastic material advantageously comprises pigments, preferably in an amount of up to about 1 % by weight of the thermoplastic material, such as from 0.01 % to 0.5 % by weight of the thermoplastic material.

The thermoplastic material may further comprise processing aid such as up to about 0.1 % by weight of wax.

In a preferred embodiment thermoplastic material comprises up to 1 % by weight in total amount of component A, component B and component C, from about 0.3 % by weight to about 1.5 % by weight of the calcium carbonate source, up to about 0.5 % by weight of the metal deactivator and at least about 95 % by weight of polypropylene (PP) or a copolymer of PP and PE.

In an embodiment the electrical cable comprises two or more conductive wires each surrounded by an insulation, the two or more conductive wires are optionally twisted. Advantageously the insulations are coloured in different colours according to national or international colour codes as described above.

In an embodiment a jacket is applied to surround the insulation or the insulations.

The electrical cable of the invention advantageously comprises two or more conductive wires individually surrounded by an insulation of the thermoplastic material described above and coloured in different colours according to national or international colour codes.

The jacket can in principle be of any material such as the polymer materials usually applied for jackets in prior art cables.

In an embodiment the jacket is of the thermoplastic material described above.

The jacket advantageously comprises a flame retardant.

In an embodiment the jacket is of a thermoplastic material comprising at least about 5 % by weight of a flame retardant and preferably the amount of flame retardant is higher. Advantageously the thermoplastic material of the jacket comprises from about 30 % by weight to about 70 % by weight of a flame retardant. Suitable flame retardants include ATH, MDH or a combination thereof. The ATH and/or MDH can for example be in a precipitated or grinded form.

All features of the inventions including ranges and preferred ranges can be combined in various ways within the scope of the invention, unless there are specific reasons not to combine such features.

The invention will be explained further with the following examples. It should be understood that the specific examples, while indicating preferred embodiments of the invention, are given by way of illustration.

### EXAMPLES

### Example 1

An electrical cable with a single conductor is produced as follows:
Conductive wire: Stranded copper conductor - 0.75 mm², Class 6 according to IEC 60228

**Insulation:**

| | | % by weight of insulation |
|---|---|---|
| Thermoplastic polymer | Isotatic polypropylene homopolymer | 97.29 |
| Component A | poly[[6-[(1,1,3,3-tetramethylbutyl)amino]-1,3,5-triazine-2,4-diyl][(2,2,6,6-tetramethyl-4-piperidinyl)imino]-1,6-hexanediyl[(2,2,6,6-tetramethyl-4-piperidiyl)imino]]) (molar weight:> 2000) | 0.2 |
| Component B | substituted bis(2,2,6,6-tetramethyl-4-piperidinyl)sebacate (molar weight: 481) | 0.2 |
| Component C | 2-(5-chloro-2H-benzotriazole-2-yl)-6-(1,1-dimethylethyl)-4-methyl-phenol (molar weight: 316) | 0.2 |
| Calcium carbonate source | Chalk with specific surface area 2.5 m²/g | 0.5 |
| Metal deactivator | 2',3-bis[[3-[3,5-di-tert-butyl-4-hydroxyphenyl]propionyl]]propionohydrazide | 0.1 |
| Pigments | Masterbatch comprising PP-PE copolymer carrier and up to 25 % by weight of pigments | 1 |
| Wax | Paraffin wax | 0.01 |
| Filler | Talc -medium diameter about 2 µm | 0.5 |

The chalk has the following composition:
50-55 percent CaO,
0.2-0.3 percent MgO,
0.5-6.0 percent SiO₂,
0.2-4.0 percent Al₂O₃,
0.02-0.7 percent Fe2O₃ + FeO,
and 40-43 percent CO₂.

The components of the insulation are compounded and extruded onto the conductive wire in a thickness of 0.5 mm nominal.

The resulting electrical cable is flexible and has a high UV resistance.

### Example 2

An electrical cable with a single conductor is produced as follows:
Conductive wire: 1.5 mm², Single solid copper conductor class 1 according to IEC 60228.

**Insulation:**

| | | % by weight of insulation |
|---|---|---|
| Thermoplastic polymer | Polypropylene co-polymer with Polyethylen | 95.515 |
| Component A | poly[[6-[(1,1,3,3-tetramethylbutyl)amino]-1,3,5-triazine-2,4-diyl][(2,2,6,6-tetramethyl-4-piperidinyl)imino]-1,6-hexanediyl[(2,2,6,6-tetra methyl-4-piperidiyl)imino]]) (molar weight:> 2000) | 0.2 |
| Component B | substituted bis(2,2,6,6-tetramethyl-4-piperidinyl)sebacate (molar weight: 481) | 0.1 |
| Component C | 2-(5-chloro-2H-benzotriazole-2-yl)-6-(1,1-dimethylethyl)-4-methyl-phenol (molar weight: 316) | 0.1 |
| Calcium carbonate source | Chalk with specific surface area 1.3 m²/g | 0.5 |
| Metal deactivator | 2',3-bis[[3-[3,5-di-tert-butyl-4-hydroxyphenyl]propionyl]]propionohydrazide | 0.075 |
| Pigments | Masterbatch comprising PP-PE copolymer carrier and up to 25 % by weight of pigments | 3.5 |
| Wax | Paraffin wax | 0.01 |
| Filler | Talc -medium diameter about 2 µm | 0 |

The components of the insulation are compounded and extruded onto the conductive wire in a thickness of 0.5 mm nominal.

The resulting electrical cable is intended for fixed installation and has a high thermal deformation resistance at 135 °C and high UV resistance.

### Example 3

An electrical cable with two conductors is produced as follows:
Conductive wires: Stranded copper conductor - 1 mm², Class 5 according to IEC 60288

**Insulation:**

| | | % by weight of insulation |
|---|---|---|
| Thermoplastic polymer | PP-PE random copolymer with up to 20 % PE | 95.6 |
| Component A | 1,3,5-Triazine-2,4,6-triamine,N,N'"-1,2-ethanediylbis[N-[-3[4,6-bis[butyl(1,2,2,6,6-pentamethyl-4piperidyl) amino-1,3,5-triazin-2-yl]amino]propyl]-N'N"-dibutyl-N',N"-bis(1,2,2,6,6-pentametyl-4-periridinyl (molar weight:> 2285.6) | 0.3 |
| Component B | bis(1,2,2,6,6-pentamethyl-4-piperidinyl)sebacate (molar weight: 509) | 0.2 |
| | or Methyl(1.2.2.6.6-pentamethyl-4-piperidinyl)sebacate (molar weight:370) | 0.2 |
| Component C | 2-(2H-benzotriazole-2-yl)-4,6-ditertpentylphenol (molar weight: 352) | 0.1 |
| Calcium carbonate source | Chalk with specific surface area 3 m²/g | 0.7 |
| Metal deactivator | 1HBenzotriazole-1-methanamine,N,N-bis(2-ethylhexyl)-ar.methyl (molar weight:553) | 0.05 |
| Pigments | Masterbatch comprising PP-PE copolymer carrier and up to 25 % by weight of pigments | 3.0 |
| Wax | Paraffin wax | 0.05 |
| Filler | - | |

The components of the insulation are compounded and extruded onto the conductive wires in a thickness of 0.6 mm. The insulation for the two conductors has different pigmentation according to desired colour code.

The insulated conductive wires are twisted and a jacket is extruded onto the twisted wires.

The jacket has the following composition:

| | | % by weight of jacket |
|---|---|---|
| Thermoplastic polymer | PP-PE random copolymer with up to 20% PE or VLLLDPE | 76.3 |
| Component A | 1,3,5-Triazine-2,4,6-triamine,N,N'"-1,2-ethanediylbis[N-[-3[4,6-bis[butyl(1,2,2,6,6-pentamethyl-4piperidyl) amino-1,3,5-triazin-2-yl]amino]propyl]-N'N"-dibutyl-N',N"-bis(1,2,2,6,6-pentametyl-4-periridinyl (molar weight: > 2285.6) | 0.3 |
| Component B | bis(1,2,2,6,6-pentamethyl-4-piperidinyl)sebacate (molar weight:509) | 0.1 |
| | or Methyl(1.2.2.6.6-pentamethyl-4-piperidinyl)sebacate (molar weight: 370) | 0.1 |
| Component C | 2-(2H-benzotriazole-2-yl)-4,6-ditertpentylphenol (molar weight: 352) | 0.2 |
| Calcium carbonate source | Chalk with specific surface area 3 m²/g | 0.6 |
| Wax | Paraffin wax | 0.05 |
| Pigments | Masterbatch comprising PP-PE copolymer carrier and up to 25 % by weight of titanium dioxide | 2.5 |
| Flame retarders | Zincborate, ATH and or MDH | 20 |

The resulting electrical cable is flexible and has a high UV resistance.

### Example 4

An electrical multicore cable conductor is produced as follows:
Conductive wire: 240 mm², Single solid aluminium solid round or sector shaped conductor according to IEC 60228 Class 1 or stranded aluminium round or sector shaped conductor according to IEC 60228 class 2.

**Insulation:**

| | | % by weight of insulation |
|---|---|---|
| Thermoplastic polymer | Polypropylene co-polymer with Polyethylen | 95.515 |
| Component A | poly[[6-[(1,1,3,3-tetramethylbutyl)amino]-1,3,5-triazine-2,4-diyl][(2,2,6,6-tetramethyl-4-piperidinyl)imino]-1,6-hexanediyl[(2,2,6,6-tetramethyl-4-piperidiyl)imino]]) (molar weight:> 2000) | 0.2 |
| Component B | substituted bis(2,2,6,6-tetramethyl-4-piperidinyl)sebacate (molar weight:481) | 0.1 |
| Component C | 2-(5-chloro-2H-benzotriazole-2-yl)-6-(1,1-dimethylethyl)-4-methyl-phenol (molar weight:316) | 0.1 |
| Calcium carbonate source | Chalk with specific surface area 1.3 m²/g | 0.5 |
| Metal deactivator | 2',3-bis[[3-[3,5-di-tert-butyl-4-hydroxyphenyl]propionyl]]propionohydrazide | 0.075 |
| Pigments | Masterbatch comprising PP-PE copolymer carrier and up to 25 % by weight of pigments | 3.5 |
| Wax | Paraffin wax | 0.01 |
| Filler | Talc -medium diameter about 2 µm | 0 |

The components of the insulation are compounded and extruded onto the conductive wire in a thickness of 1.7 mm nominal.

The resulting electrical cable is intended for fixed installation or buried in the ground and has a high thermal deformation resistance at 135 °C and high UV resistance.

The insulated conductive wires are twisted and a jacket is extruded onto the twisted wires.

The jacket has the following composition:

| | | % by weight of (insulation) jacket |
|---|---|---|
| Thermoplastic polymer | PE polymer of the MD or LLD type | 96.15 |
| Component A | 1,3,5-Triazine-2,4,6-triamine,N,N'"-1,2-ethanediylbis[N-[-3[4,6-bis[butyl(1,2,2,6,6-pentamethyl-4piperidyl) amino-1,3,5-triazin-2-yl]amino]propyl]-N'N"-dibutyl-N',N"-bis(1,2,2,6,6-pentametyl-4-periridinyl (molar weight: > 2285.6) | 0.3 |
| Component B | bis(1,2,2,6,6-pentamethyl-4-piperidinyl)sebacate (molar weight: 509) | 0.1 |
| | or Methyl(1.2.2.6.6-pentamethyl-4-piperidinyl)sebacate (molar weight:370) | 0.1 |
| Component C | 2-(2H-benzotriazole-2-yl)-4,6-ditertpentylphenol (molar weight:352) | 0.2 |
| Pigments | Masterbatch comprising PP-PE copolymer carrier and up to 25 % by weight of titanium dioxide | 2.5 |
| Calcium carbonate source | Chalk with specific surface area 3 m²/g | 0.6 |
| Wax | Paraffin wax | 0.05 |

## Claims

1. An electrical cable comprising at least one conductive wire surrounded by an insulation, wherein the insulation is of a thermoplastic material comprising
- at least 0.01 % by weight of component A selected from oligomeric hindered amines of the HALS type having a molecular weight of from 500 to 3400;
- at least 0.01 % by weight of component B selected from UV stabilizers comprising at least one sebacate moiety substituted with at least one R₁ and optionally R₂, where R₁ means 1,2,2,6,6-pentamethyl-4-piperidinyl or 2,2,6,6-tetramethyl-4-piperidinyl and R₂ means methyl or 1,2,2,6,6-pentamethyl-4-piperidinyl;
- at least 0.01 % by weight of component C selected from hindered phenolics comprising a benzotriazole moiety and having a molecular weight of from about 200 to about 500 and
- at least 0.1 % by weight of a calcium carbonate source.

2. The electrical cable of claim 1 wherein the calcium carbonate source is selected from essentially pure calcium carbonate, calcite, aragonite, vaterite, chalk, limestone, marble, travertine or combinations thereof, preferably the calcium carbonate source is in the form of chalk, and preferably the calcium carbonate source comprises at least 40 % by weight of calcium carbonate, preferably at least 50 % by weight of calcium carbonate, and preferably the calcium carbonate source comprises at least 10 % by weight of CaO, such as from 30 to 50 % by weight of CaO, preferably the calcium carbonate source is in the form of particles with a specific surface area of at least about 0.5 m²/g determined by nitrogen adsorption BET method, preferably the calcium carbonate source has a specific surface area of up to 10 m²/g, such as from 1 m²/g to 9 m²/g, such as from 1.5 to 5 m²/g.

3. The electrical cable of any one of the preceding claims wherein the calcium carbonate source is homogenously distributed in the thermoplastic material, or the concentration of calcium carbonate source in the thermoplastic material is higher at a longer distance from the conductive wire than at a shorter distance from the wire, optionally the insulation has an outer surface impregnated with chalk powder.

4. The electrical cable of any one of the preceding claims wherein the thermoplastic material comprises at least 0.3 % by weight of the calcium carbonate source, preferably the thermoplastic material comprises from 0.5 % by weight to 3 % by weight of the calcium carbonate source, such as from 1 % by weight to 2 % by weight of the calcium carbonate source.

5. The electrical cable of any one of the preceding claims wherein the component A comprises poly[[6-[(1,1,3,3-tetramethylbutyl)amino]-1,3,5-triazine-2,4-diyl][(2,2,6,6-tetramethyl-4-piperidinyl)imino]-1,6-hexanediyl[(2,2,6,6-tetramethyl-4-piperidiyl)imino]]); 1,3,5-Triazine-2,4,6-triamine,N,N'"-1,2-ethanediylbis[N-[-3[4,6-bis[butyl(1,2,2,6,6-pentamethyl-4piperidyl) amino-1,3,5-triazin-2-yl]amino]propyl]-N'N"-dibutyl-N',N"-bis(1,2,2,6,6-pentametyl-4-periridinyl; Tetrakis [Methylene-3(3',5'-di-tert-butyl-4-hydroxyphenyl)propionate]methane or 1,6-Hexanediamine,N,N'-bis(2,2,6,6-tetramethyl-4-piperidinyl)-polymer-polymer conjugate with 2,4,6-trichloro-1,3,5-triazine, reaction products with N-butyl-1-butanamine and/or N-butyl-2,2,6,6-tetramethyl-4-piperidinamine or combinations thereof, preferably the component A has a molar weight of at least about 1000, and preferably the thermoplastic material comprises up to 0.7 % by weight of component A, preferably from 0.2 to 0.5 % by weight of component A.

6. The electrical cable of any one of the preceding claims wherein the component B comprises substituted bis(2,2,6,6-tetramethyl-4-piperidinyl)sebacate; bis(1,2,2,6,6-pentamethyl-4-piperidinyl)sebacate or Methyl(l.2.2.6.6-pentamethyl-4-piperidinyl)sebacate or combinations thereof, preferably the component B has a molar weight of at least about 300, and preferably the thermoplastic material comprises up to 0.7 % by weight of component B, preferably from 0.2 to 0.5 % by weight of component B.

7. The electrical cable of any one of the preceding claims wherein the component C comprises 2-(5-chloro-2H-benzotriazole-2-yl)-6-(1,1-dimethylethyl)-4-methyl-phenol; 2-(2H-benzotriazole-2-yl)-4,6-ditertpentylphenol; 2-(2H-benzotriazole-2-yl)-p-cresol;2,4-di-tert-butyl-6-(5-chlorobenzotriazole-2-yl)phenol; [2-hydroxy-4-(octyloxy)phenyl]phenyl-methanone or combinations thereof, preferably the component C has a molar weight of at least 200, and preferably the thermoplastic material comprises up to 0.7 % by weight of component C, preferably from 0.2 to 0.5 % by weight of component B.

8. The electrical cable of any one of the preceding claims wherein the total amount of component A, component B and component C is up to 1 % by weight of the thermoplastic material, such as from 0.4 % to 0.8 % by weight of the thermoplastic material.

9. The electrical cable of any one of the preceding claims wherein the thermoplastic material comprises up to about 0.1 % by weight of a metal deactivator preferably selected from 2',3-bis[[3-[3,5-di-tert-butyl-4-hydroxyphenyl]propionyl]]propionohydrazide; 1HBenzotriazole-1-methanamine,N,N-bis(2-ethylhexyl)-ar.methyl; p-(p-tolyl-sulfonylamido)-diphenylamine or combinations thereof.

10. The electrical cable of any one of the preceding claims wherein the thermoplastic material comprises at least 92 % by weight of polypropylene (PP), polyethylene (PE), a copolymer of PP and PE, or a mixture thereof, preferably the thermoplastic material comprises at least 93 % of weight, such as at least 94 % by weight, such as at least 95 % by weight, such as at least 96 % by weight, such as at least 97 % by weight of polypropylene (PP), polyethylene (PE), a copolymer of PP and PE, or a mixture thereof, preferably the thermoplastic material comprises at least 95 % by weight of polypropylene (PP), preferably the thermoplastic material comprises at least 95 % by weight of a copolymer of PP and PE such as a block copolymer or a random copolymer.

11. The electrical cable of any one of the preceding claims wherein the thermoplastic material comprises pigments, preferably in an amount of up to 1 % by weight of the thermoplastic material, such as from 0.01 % to 0.5 % by weight of the thermoplastic material.

12. The electrical cable of any one of the preceding claims wherein the thermoplastic material comprises up to 0.1 % by weight of wax.

13. The electrical cable of any one of the preceding claims wherein the thermoplastic material comprises up to 1 % by weight in total amount of component A, component B and component C, from 0.3 % by weight to 1.5 % by weight of the calcium carbonate source, up to 0.5 % by weight of the metal deactivator and at least 95 % by weight of polypropylene (PP) or a copolymer of PP and PE.

14. The electrical cable of any one of the preceding claims wherein the cable comprises two or more conductive wires each surrounded by an insulation, the two or more conductive wires are optionally twisted, preferably the cable comprises a jacket surrounding the insulation and preferably the cable comprises two or more conductive wires individually surrounded by an insulation and the cable further comprises a jacket surrounding the individually insulated wires.

15. The electrical cable of any one of claim 14 wherein the jacket is of a thermoplastic material comprising
- at least 0.01 % by weight of component A selected from oligomeric hindered amines of the HALS type having a molecular weight of from 500 to 3400;
- at least 0.01 % by weight of component B selected from UV stabilizers comprising at least one sebacate moiety substituted with at least one R₁ and optionally R₂, where R₁ means 1,2,2,6,6-pentamethyl-4-piperidinyl or 2,2,6,6-tetramethyl-4-piperidinyl and R₂ means methyl or 1,2,2,6,6-pentamethyl-4-piperidinyl;
- at least 0.01 % by weight of component C selected from hindered phenolics comprising a benzotriazole moiety and having a molecular weight of from 200 to 500 and
- at least 0.1 % by weight of a calcium carbonate source preferably the thermoplastic material of the jacket is as the thermoplastic material of the insulation defined in any one of the claims 2-14, and preferably the thermoplastic material of the jacket comprises at least 5 % by weight of a flame retardant, preferably the thermoplastic material of the jacket comprises from 30 % by weight to 70 % by weight of a flame retardant preferably selected from ATH , MDH or a combination thereof.

## Patentansprüche

1. Elektrokabel, das wenigstens einen leitfähigen Draht umfasst, der von einer Isolierung umgeben ist, wobei die Isolierung aus einem thermoplastischen Material ist, das umfasst:
- wenigstens 0,01 Gew.-% einer Komponente A, ausgewählt aus oligomerisch gehinderten Aminen vom HALS-Typ mit einem Molekulargewicht von 500 bis 3400;
- wenigstens 0,01 Gew.-% einer Komponente B, ausgewählt aus UV-Stabilisatoren, die mindestens einen Sebacat-Teil umfassen, der mit wenigstens einem R₁ und optional R₂ substituiert ist, wobei R₁ 1,2,2,6,6-Pentamethyl-4-piperidinyl oder 2,2,6,6-Tetramethyl-4-piperidinyl bedeutet und R₂ Methyl oder 1,2,2,6,6-Pentamethyl-4-piperidinyl bedeutet;
- wenigstens 0,01 Gew.-% einer Komponente C, ausgewählt aus gehinderten Phenolen, die einen Benzotriazol-Teil umfassen und ein Molekulargewicht von etwa 200 bis etwa 500 aufweisen, und
- wenigstens 0,1 Gew.-% einer Calciumcarbonatquelle.

2. Elektrokabel nach Anspruch 1, wobei die Calciumcarbonatquelle aus im Wesentlichen reinen Calciumcarbonat, Calcit, Aragonit, Vaterit, Kreide, Kalkstein, Marmor, Travertin oder Kombinationen derselben ausgewählt ist, vorzugsweise die Calciumcarbonatquelle in Form von Kreide vorliegt und vorzugsweise die Calciumcarbonatquelle wenigstens 40 Gew.-% Calciumcarbonat, vorzugsweise wenigstens 50 Gew.-% Calciumcarbonat, umfasst und vorzugsweise die Calciumcarbonatquelle wenigstens 10 Gew.-% CaO, wie etwa 30 bis 50 Gew.-% CaO, umfasst, vorzugsweise die Calciumcarbonatquelle in Form von Partikeln mit einer spezifischen Oberfläche von wenigstens etwa 0,5 m²/g, bestimmt durch ein BET-Verfahren mit Stickstoffadsorption, vorliegt, vorzugsweise die Calciumcarbonatquelle eine spezifische Oberfläche von bis zu 10 m²/g, wie etwa 1 m²/g bis 9 m²/g, wie etwa 1,5 bis 5 m²/g, aufweist.

3. Elektrokabel nach einem der vorhergehenden Ansprüche, wobei die Calciumcarbonatquelle in dem thermoplastischen Material homogen verteilt ist oder die Konzentration der Calciumcarbonatquelle in dem thermoplastischen Material in einem längeren Abstand von dem leitfähigen Draht höher ist als in einem kürzeren Abstand von dem Draht, optional die Isolierung eine Außenfläche aufweist, die mit Kreidepulver imprägniert ist.

4. Elektrokabel nach einem der vorhergehenden Ansprüche, wobei das thermoplastische Material wenigstens 0,3 Gew.-% der Calciumcarbonatquelle umfasst, vorzugsweise das thermoplastische Material 0,5 Gew.-% bis 3 Gew.-% der Calciumcarbonatquelle, wie etwa 1 Gew.-% bis 2 Gew.-% der Calciumcarbonatquelle, umfasst.

5. Elektrokabel nach einem der vorhergehenden Ansprüche, wobei die Komponente A Poly[[6-[(1,1,3,3-tetramethylbutyl)amino]-1,3,5-triazin-2,4-diyl][(2,2,6,6-tetramethyl-4-piperidinyl)imino]-1,6-hexandiyl[(2,2,6,6-tetramethyl-4-piperidiyl)imino]]); 1,3,5-Triazin-2,4,6-triamin,N,N'"1,2-ethandiylbis[N-[-3[4,6-bis[butyl(1,2,2,6,6-pentamethyl-4-piperidyl)amino-1,3,5-triazin-2-yl]amino]propyl]-N',N"-dibutyl-N',N"-bis(1,2,2,6,6-pentamethyl-4-periridinyl; Tetrakis[methylene-3(3',5'-di-tert-butyl-4-hydroxyphenyl)propionat]methan oder 1,6-Hexandiamin-N,N'-bis(2,2,6,6-tetramethyl-4-piperidinyl)-Polymer-Polymerkonjugat mit 2,4,6-Trichlor-1,3,5-triazin, Reaktionsprodukte mit N-Butyl-1-butanamin und/oder N-Butyl-2,2,6,6-tetramethyl-4-piperidinamin oder Kombinationen derselben umfasst, vorzugsweise die Komponente A eine molare Masse von wenigstens etwa 1000 aufweist und vorzugsweise das thermoplastische Material bis zu 0,7 Gew.-% der Komponente A, vorzugsweise 0,2 bis 0,5 Gew.-% der Komponente A, umfasst.

6. Elektrokabel nach einem der vorhergehenden Ansprüche, wobei die Komponente B substituiertes Bis(2,2,6,6-tetramethyl-4-piperidinyl)sebacat; Bis(1,2,2,6,6-pentamethyl-4-piperidinyl)sebacat oder Methyl(1,2,2,6, 6-pentamethyl-4-piperidinyl)sebacat oder Kombinationen derselben umfasst, vorzugsweise die Komponente B eine molare Masse von wenigstens etwa 300 aufweist und vorzugsweise das thermoplastische Material bis zu 0,7 Gew.-% der Komponente B, vorzugsweise 0,2 bis 0,5 Gew.-% der Komponente B, umfasst.

7. Elektrokabel nach einem der vorhergehenden Ansprüche, wobei die Komponente C 2-(5-Chlor-2H-benzotriazol-2-yl)-6-(1,1-dimethylethyl)-4-methylphenol; 2-(2H-Benzotriazol-2-yl)-4,6-ditertpentylphenol; 2-(2H-benzotriazol-2-yl)-p-cresol;2,4-Di-tert-butyl-6-(5-chlorbenzotriazol-2-yl)phenol; [2-Hydroxy-4-(octyloxy)phenyl]phenylmethanon oder Kombinationen derselben umfasst, vorzugsweise die Komponente C eine molare Masse von wenigstens 200 aufweist und vorzugsweise das thermoplastische Material bis zu 0,7 Gew.-% der Komponente C, vorzugsweise 0,2 bis 0,5 Gew.-% der Komponente B, umfasst.

8. Elektrokabel nach einem der vorhergehenden Ansprüche, wobei die Gesamtmenge von Komponente A, Komponente B und Komponente C bis zu 1 Gew.-% des thermoplastischen Materials, wie etwa 0,4 Gew.-% bis 0,8 Gew.-% des thermoplastischen Materials, beträgt.

9. Elektrokabel nach einem der vorhergehenden Ansprüche, wobei das thermoplastische Material bis zu etwa 0,1 Gew.-% eines Metalldeaktivator umfasst, der vorzugsweise aus 2',3-Bis[[3-[3,5-di-tert-butyl-4-hydroxyphenyl]propionyl]]propionhydrazid; 1H-Benzotriazol-1-methanamin,N,N-bis(2-ethylhexyl)-ar.methyl; p-(p-tolylsulfonylamido)diphenylamin oder Kombinationen derselben ausgewählt ist.

10. Elektrokabel nach einem der vorhergehenden Ansprüche, wobei das thermoplastische Material wenigstens 92 Gew.-% Polypropylen (PP), Polyethylen (PE), eines Copolymers aus PP und PE oder eines Gemisches derselben umfasst, vorzugsweise das thermoplastische Material wenigstens 93 Gew.-%, wie etwa wenigstens 94 Gew.-%, wie etwa wenigstens 95 Gew.-%, wie etwa wenigstens 96 Gew.-%, wie etwa wenigstens 97 Gew.-%, Polypropylen (PP), Polyethylen (PE), eines Copolymers aus PP und PE oder eines Gemisches derselben umfasst, vorzugsweise das thermoplastische Material wenigstens 95 Gew.-% Polypropylen (PP) umfasst, vorzugsweise das thermoplastische Material wenigstens 95 Gew.-% eines Copolymers aus PP und PE, wie etwa eines Blockcopolymers oder eines Copolymers mit Zufallsverteilung, umfasst.

11. Elektrokabel nach einem der vorhergehenden Ansprüche, wobei das thermoplastische Material Pigmente umfasst, vorzugsweise in einer Menge von bis zu 1 Gew.-% des thermoplastischen Materials, wie etwa 0,01 Gew.-% bis 0,5 Gew.-% des thermoplastischen Materials.

12. Elektrokabel nach einem der vorhergehenden Ansprüche, wobei das thermoplastische Material bis zu 0,1 Gew.-% Wachs umfasst.

13. Elektrokabel nach einem der vorhergehenden Ansprüche, wobei das thermoplastische Material bis zu 1 Gew.-% in der Gesamtmenge an Komponente A, Komponente B und Komponente C, 0,3 Gew.-% bis 1,5 Gew.-% der Calciumcarbonatquelle, bis zu 0,5 Gew.-% des Metalldeaktivators und wenigstens 95 Gew.-% Polypropylen (PP) oder eines Copolymers aus PP und PE umfasst.

14. Elektrokabel nach einem der vorhergehenden Ansprüche, wobei das Kabel zwei oder mehr leitfähige Drähte umfasst, die jeweils von einer Isolierung umgeben sind, die zwei oder mehr leitfähigen Drähte optional verdrillt sind, vorzugsweise das Kabel einen Mantel umfasst, der die Isolierung umgibt, und vorzugsweise das Kabel zwei oder mehr leitfähige Drähte umfasst, die einzeln von einer Isolierung umgeben sind, und das Kabel ferner einen Mantel umfasst, der die einzeln isolierten Drähte umgibt.

15. Elektrokabel nach einem von Anspruch 14, wobei der Mantel aus einem thermoplastischen Material ist, das umfasst:
- wenigstens 0,01 Gew.-% einer Komponente A, ausgewählt aus oligomerisch gehinderten Aminen vom HALS-Typ mit einem Molekulargewicht von 500 bis 3400;
- wenigstens 0,01 Gew.-% einer Komponente B, ausgewählt aus UV-Stabilisatoren, die mindestens einen Sebacat-Teil umfassen, der mit wenigstens einem R₁ und optional R₂ substituiert ist, wobei R₁ 1,2,2,6,6-Pentamethyl-4-piperidinyl oder 2,2,6,6-Tetramethyl-4-piperidinyl bedeutet und R₂ Methyl oder 1,2,2,6,6-Pentamethyl-4-piperidinyl bedeutet;
- wenigstens 0,01 Gew.-% einer Komponente C, ausgewählt aus gehinderten Phenolen, die einen Benzotriazol-Teil umfassen und ein Molekulargewicht von 200 bis 500 aufweisen, und
- wenigstens 0,1 Gew.-% einer Calciumcarbonatquelle, wobei vorzugsweise das thermoplastische Material des Mantels gleich dem thermoplastischen Material der Isolierung ist, das in einem der Ansprüche 2-14 definiert ist, und vorzugsweise das thermoplastische Material des Mantels wenigstens 5 Gew.-% eines Flammschutzmittels umfasst, vorzugsweise das thermoplastische Material des Mantels 30 Gew.-% bis 70 Gew.-% eines Flammschutzmittels, vorzugsweise ausgewählt aus ATH, MDH oder einer Kombination derselben, umfasst.

## Revendications

1. Câble électrique comprenant au moins un fil conducteur entouré d'une isolation, dans lequel l'isolation est constituée d'un matériau thermoplastique comprenant
- au moins 0,01 % en poids d'un composant A choisi parmi des amines oligomères encombrées du type HALS ayant un poids moléculaire compris entre 500 et 3400 ;
- au moins 0,01 % en poids d'un composant B choisi parmi des stabilisants vis-à-vis des UV comprenant au moins un fragment sébacate substitué avec au moins un R₁ et éventuellement R₂, où R₁ signifie le 1,2,2,6,6-pentaméthyl-4-pipéridinyle ou le 2,2,6,6-tétraméthyl-4-pipéridinyle et R₂ signifie le 1,2,2,6,6-pentaméthyl-4-pipéridinyle ;
- au moins 0,01 % en poids d'un composant C choisi parmi des phénoliques encombrés comprenant un fragment benzotriazole et ayant un poids moléculaire compris entre environ 200 et environ 500 ;
- au moins 0,01 % en poids d'une source de carbonate de calcium.

2. Câble électrique selon la revendication 1, dans lequel la source de carbonate de calcium est choisie parmi du carbonate de calcium sensiblement pur, de la calcite, de l'aragonite, de la vatérite, de la craie, du calcaire, du marbre, de la travertine ou des combinaisons de ceux-ci, de préférence la source de carbonate de calcium se trouve sous la forme de craie, et de préférence la source de carbonate de calcium comprend au moins 40 % en poids de carbonate de calcium, de préférence au moins 50 % en poids de carbonate de calcium, et de préférence la source de carbonate de calcium comprend au moins 10 % en poids de CaO, tel que compris entre 30 et 50 % en poids de CaO, de préférence la source de carbonate de calcium se trouve sur la forme de particules ayant une surface spécifique au moins d'environ 0,5 m²/g déterminée au moyen du procédé BET d'adsorption d'azote, de préférence la source de carbonate de calcium présente une surface spécifique jusqu'à 10 m²/g, telle que comprise entre 1 m²/g et 9 m²/g, telle que comprise entre 1,5 m²/g et 5 m²/g.

3. Câble électrique selon l'une quelconque des revendications précédentes, dans lequel la source de carbonate de calcium est distribuée de manière homogène dans le matériau thermoplastique, ou la concentration de la source de carbonate de calcium dans le matériau thermoplastique est supérieure à une distance plus élevée à partir du fil conducteur qu'à une distance plus petite à partir du fil, éventuellement l'isolation comporte une surface extérieure imprégnée d'une poudre de craie.

4. Câble électrique selon l'une quelconque des revendications précédentes, dans lequel le matériau thermoplastique comprend au moins 0,3 % en poids de la source de carbonate de calcium, de préférence le matériau thermoplastique comprend entre 0,5 % en poids et 3 % en poids de la source de carbonate de calcium, tel qu'entre 1 % en poids et 2 % en poids de la source de carbonate de calcium.

5. Câble électrique selon l'une quelconque des revendications précédentes, dans lequel le composant A comprend le poly[[6-[(1,1,3,3-tétraméthylbutyl)amino]-1,3,5-triazine-2,4-diyl] [(2,2,6,6-tétraméthyl-4-pipéridinyl)imino]-1,6-hexanediyl[(2,2,6,6-tétraméthyl-4-pipéridiyl)imino]]) ; le 1,3,5-triazine-2,4,6-triamine,N,N"'-1,2-éthanediylbis[N-[-3[4,6-bis[butyl(1,2,2,6,6-pentaméthyl-4-pipéridyl)amino-1,3,5-triazin-2-yl]amino]propyl]-N'N"-dibutyl-N',N"-bis(1,2,2,6,6-pentaméthyl-4-périridinyle ; le tétrakis[méthylène-3-(3',5'-di-tert-butyl-4-hydroxyphényl)propionate]méthane ou le 1,6-hexanediamine,N,N'-bis(2,2,6,6-tétraméthyl-4-pipéridinyl)-polymère-conjugué de polymère avec du 2,4,6-trichloro-1,3,5-triazine, des produits de réaction avec de la N-butyl-1-butanamine et/ou de la N-butyl-2,2,6,6-tétraméthyl-4-pipéridinamine ou des combinaisons de ceux-ci, de préférence le composant A possède un poids molaire d'au moins environ 1000, et de préférence le matériau thermoplastique comprend jusqu'à 0,7 % en poids du composant A, de préférence entre 0,2 et 0,5 % en poids du composant A.

6. Câble électrique selon l'une quelconque des revendications précédentes, dans lequel le composant B comprend le bis(2,2,6,6-tétraméthyl-4-pipéridinyl)sébacate substitué ; le bis(1,2,2,6,6-pentaméthyl-4-pipéridinyl)sébacate ou le méthyl(1.2.2.6.6-pentaméthyl-4-pipéridinyl)sébacate ou des combinaisons de ceux-ci, de préférence le composant B possède un poids molaire d'au moins environ 300, et de préférence le matériau thermoplastique comprend jusqu'à 0,7 % en poids de composant B, de préférence entre 0,2 % de et 0,5 % en poids de composant B.

7. Câble électrique l'une quelconque des revendications précédentes, dans lequel le composant C comprend le 2-(5-chloro-2H-benzotriazole-2-yl)-6-(1,1-diméthyléthyl)-4-méthyl-phénol ; le 2-(2H-benzotriazole-2-yl)-4,6-di-tert-pentylphénol ; le 2-(2H-benzotriazole-2-yl)-p-crésol ; le 2,4-di-tert-butyl-6-(5-chlorobenzotriazole-2-yl)phénol ; la [2-hydroxy-4-(octyloxy)phényl]phényl-méthanone ou des combinaisons de ceux-ci, de préférence le composant C possède un poids molaire d'au moins 200, et de préférence le matériau thermoplastique comprend jusqu'à 0,7 % en poids du composant C, de préférence entre 0,2 % et 0,5 % en poids du composant B.

8. Câble électrique selon l'une quelconque des revendications précédentes, dans lequel la quantité totale de composant A, de composant B et de composant C représente jusqu'à 1 % en poids du matériau thermoplastique, telle qu'entre 0,4 % et 0,8 % en poids du matériau thermoplastique.

9. Câble électrique selon l'une quelconque des revendications précédentes, dans lequel le matériau thermoplastique comprend jusqu'à environ 0,1 % en poids d'un désactivateur métallique de préférence choisi parmi le 2',3-bis[[3-[3,5-di-tert-butyl-4-hydroxyphényl]propionyl]]propionohydrazide ; le 1H-benzotriazole-1-méthanamine,N,N-bis(2-éthylhexyl)-ar.méthyle ; la p-(p-tolyl-sulfonylamido)diphénylamine ou des combinaisons de ceux-ci.

10. Câble électrique selon l'une quelconque des revendications précédentes, dans lequel le matériau thermoplastique comprend au moins 92 % en poids de polypropylène (PP), de polyéthylène (PE), d'un copolymère de PP et PE, ou d'un mélange de ceux-ci, de préférence le matériau thermoplastique comprend au moins 93 % en poids, de sorte qu'au moins 94 % en poids, de sorte qu'au moins 95 % en poids, de sorte qu'au moins 96 % en poids, de sorte qu'au moins 97 % en poids de polypropylène (PP), de polyéthylène (PE), d'un copolymère de PP et de PE, ou d'un mélange de ceux-ci, de préférence le matériau thermoplastique comprend au moins 95 % en poids de polypropylène (PP), de préférence le matériau thermoplastique comprend au moins 95 % en poids d'un copolymère de PP et de PE tel qu'un copolymère séquencé ou qu'un copolymère aléatoire.

11. Câble électrique selon l'une quelconque des revendications précédentes, dans lequel le matériau thermoplastique comprend des pigments, de préférence en une quantité comprise jusqu'à 1 % en poids du matériau thermoplastique, telle qu'entre 0,01 % et 0,5 % en poids du matériau thermoplastique.

12. Câble électrique selon l'une quelconque des revendications précédentes, dans lequel le matériau thermoplastique comprend jusqu'à 0,1 % en poids de cire.

13. Câble électrique selon l'une quelconque des revendications précédentes, dans lequel le matériau thermoplastique comprend jusqu'à 1 % en poids d'une quantité totale de composant A, de composant B et de composant C, entre 0,3 % en poids et 1,5 % en poids de la source de carbonate de calcium, jusqu'à 0,5 % en poids du désactivateur métallique et au moins 95 % en poids de polypropylène (PP) ou d'un copolymère de PP et de PE.

14. Câble électrique selon l'une quelconque des revendications précédentes, dans lequel le câble comprend au moins deux fils conducteurs qui sont chacun entourés d'une isolation, les au moins deux fils conducteurs sont éventuellement tordus, de préférence le câble comprend une gaine entourant l'isolation et de préférence le câble comprend au moins deux fils conducteurs individuellement entourés d'une isolation et le câble comprend en outre une gaine entourant les fils individuellement isolés.

15. Câble électrique selon la revendication 14, dans lequel la gaine est constituée d'un matériau thermoplastique comprenant
- au moins 0,01 % en poids du composant A choisi parmi des amines oligomères encombrées du type HALS ayant un poids moléculaire compris entre 500 et 3400 ;
- au moins 0,01 % en poids du composant B choisi parmi des stabilisants vis-à-vis des UV comprenant au moins un fragment sébacate substitué avec au moins un R₁ et éventuellement R₂, où R₁ signifie le 1,2,2,6,6-pentaméthyl-4-pipéridinyle ou le 2,2,6,6-tétraméthyl-4-pipéridinyle et R₂ signifie le 1,2,2,6,6-pentaméthyl-4-pipéridinyle ;
- au moins 0,01 % en poids du composant C choisi parmi des phénoliques encombrés comprenant un fragment benzotriazole et ayant un poids moléculaire compris entre 200 et 500 ;
- au moins 0,01 % en poids d'une source de carbonate de calcium, de préférence le matériau thermoplastique de la gaine est comme le matériau thermoplastique de l'isolation défini dans l'une quelconque des revendications 2 à 14, et de préférence le matériau thermoplastique de la gaine comprend au moins 5 % en poids d'un agent ignifuge, de préférence le matériau thermoplastique de la gaine comprend entre 30 % en poids et 70 % en poids d'un agent ignifuge de préférence choisi parmi l'ATH, le MDH ou une combinaison de ceux-ci.
